# EUROPÄISCHE PATENTSCHRIFT

(11) **EP 1 979 729 B1**
(45) Veröffentlichungstag und Bekanntmachung des Hinweises auf die Patenterteilung: **30.03.2011**
(21) Anmeldenummer: 07703812.3
(22) Anmeldetag: 12.01.2007
(51) Int. Cl.: G01L 5/10

(54) **VERFAHREN ZUR KONTINUIERLICHEN BESTIMMUNG DER ZUGKRAFT F IN EINEM SEIL EINER FESTSTELLBREMSE**
METHOD FOR CONTINUOUSLY DETERMINING THE TENSILE FORCE F IN A CABLE OF A PARKING BRAKE
PROCEDE DE DETERMINATION CONTINUE DE LA FORCE DE TRACTION F DANS LE CABLE D'UN FREIN DE STATIONNEMENT

(30) Priorität: 23.01.2006 DE 102006003173
(43) Veröffentlichungstag der Anmeldung: 15.10.2008
(73) Patentinhaber: Continental Automotive GmbH, 30165 Hannover (DE)
(72) Erfinder: ANTE, Johannes, 93055 Regensburg (DE); EHRET, Juergen, 69469 Weinheim (DE)
(86) Internationale Anmeldenummer: PCT/EP2007/050270
(87) Internationale Veröffentlichungsnummer: WO 2007/082835

(56) Entgegenhaltungen:
- WO-A-98/56633
- DE-A1-102004 025 361

## Beschreibung

Die Erfindung bezieht sich auf ein Verfahren zur kontinuierlichen Bestimmung der Zugkraft F in einem Seil einer Feststellbremse. Verfahren zur kontinuierlichen Bestimmung der Zugkraft in Seilen von Feststellbremsen sind bekannt. In der DE 10 2004 025 361 A1 wird eine elektromechanisch betätigbare Feststellbremse für Kraftfahrzeuge beschrieben. Nach dem dort beschriebenen Verfahren zur Bestimmung der Zugkraft im Seil ist es vorgesehen, dass zumindest ein Teil der Kraftmesseinrichtung in mindestens einem Bremsseil derart integriert ist, dass die Übertragung der Zugspannkraft über das Teil erfolg. Dabei ist nachteilig, dass das Seil in mehrere Abschnitte aufgeteilt werden muss, zwischen denen sich dann Kraftmesseinrichtungen befinden.

In der WO 98/56633 A1 wird ein Verfahren zur Bestimmung der Zugkraft in einem Seil einer Feststellbremse beschrieben, bei dem die Kraftmesseinrichtung in einer Stelleinheit integriert ist, und die Seiltülle an der Kraftmesseinrichtung befestigt wird, ohne dass das Seil aufgeteilt werden muss.

Der Erfindung liegt daher die Aufgabe zugrunde, ein Verfahren zur kontinuierlichen Bestimmung der Zugkraft in einem Seil einer Feststellbremse zu schaffen, bei dem das Seil nicht unterbrochen werden muss. Auf die Anordnung von Kraftmesseinrichtungen direkt innerhalb des Seiles soll dabei vollständig verzichtet werden.

Die der Erfindung zugrunde liegende Aufgabe wird durch ein Verfahren zur kontinuierlichen Bestimmung der Zugkraft F in einem Seil einer Feststellbremse gelöst, bei dem die Zugkraft F auf eine Seiltülle übertragen wird, die an einem, einer Antriebsspindel abgewandten Ende eines mäanderförmigen Zwischenteils mit einem Magneten oder einem Magnetsensor positioniert ist, das durch die Zugkraft F eine Längenänderung in Richtung seiner Längsachse erfährt, bei dem die Längenänderung eine Relativbewegung zwischen dem Magneten und dem Magnetsensor bewirkt, wodurch die Signalspannung des Magnetsensors verändert wird, und die Zugkraft F dann aus der jeweiligen Signalspannung ermittelt wird. Durch die Antriebsspindel, die beispielsweise einen kreisrunden Querschnitt aufweist, wird die Zugkraft F aufgebracht. Die Antriebsspindel steht dazu mit einem Antrieb in Verbindung. Das mäanderförmige Zwischenteil ist im Querschnitt mindestens teilweise wellenförmig ausgebildet. In der Regel besteht es aus einem metallischen Werkstoff. Es ist jedoch auch möglich, das mäanderförmige Zwischenteil aus einem Kunststoff zu fertigen. Das mäanderförmige Zwischenteil ist entweder mit einem Magneten oder mit einem Magnetsensor fest verbunden. Wird das mäanderförmige Zwischenteil nun einer Längenänderung ausgesetzt, so verschiebt sich entweder der Magnet oder der Magnetsensor in Längsrichtung in entsprechender Weise, je nachdem, ob der Magnet oder der Magnetsensor am mäanderförmigen Zwischenteil fest positioniert ist. Der Magnet und der Magnetsensor stehen somit in einem funktionellen Zusammenhang zueinander. Ist der Magnet am mäanderförmigen Zwischenteil befestigt, so wird der Magnetsensor direkt benachbart zum mäanderförmigen Zwischenteil im Bereich des Magnetfelds des Magneten angeordnet beziehungsweise umgekehrt. Durch die Zugkraft F und die damit verbundene Längenänderung des mäanderförmigen Zwischenteils erfahren somit Magnet und Magnetsensor eine Relativbewegung zueinander. Dies bedeutet, dass der Magnetsensor im Magnetfeld des Magneten verschoben wird, was sich direkt auf die Signalspannung des Magnetsensors auswirkt. Die Signalspannung des Magnetsensors steht somit in einem funktionellen Zusammenhang zur aufgebrachten Zugkraft F im Seil. Aus oder Änderung der Signalspannung kann somit die Zugkraft F direkt berechnet werden, was in der Regel mit Hilfe von Rechnern erfolgt. Als bevorzugte Magnetsensoren werden beispielsweise Hallsensoren eingesetzt, mit denen eine genaue Bestimmung der Zugkraft F bei gleichzeitig minimalem Bauraum möglich ist. Die Positionierung der Seiltülle am der Abtriebsspindel abgewandeten Ende des mäanderförmigen Zwischenteils kann beispielsweise formschlüssig erfolgen. Es ist auch möglich, je nach Werkstoffauswahl, die Seiltülle mit dem mäanderförmigen Zwischenteil zu verschweißen oder gegebenenfalls als Einzelteil zu fertigen. Das mäanderförmige Zwischenteil ist im Bereich seiner Wellenstruktur in der Regel einteilig gefertigt. Dies ist jedoch nicht zwingend erforderlich. Es hat sich in überraschender Weise gezeigt, dass eine kontinuierliche Bestimmung der Zugkraft F auf diese Weise besonders vorteilhaft durchgeführt werden kann, wobei sichergestellt ist, dass keine Kraftmesseinrichtungen direkt innerhalb des Seiles angeordnet werden müssen.

Eine bevorzugte Ausgestaltung der Erfindung besteht darin, dass die Zugkraft F in ein mäanderförmiges Zwischenteil eingebracht wird, das im Querschnitt 3 bis 4 Wellen aufweist. Auf diese Weise lässt sich die Zugkraft F mit einer relativ hohen Genauigkeit bestimmen, wobei gleichzeitig der Bauraum in optimaler Weise verkleinert wird.

Gemäß einer weiteren bevorzugten Ausgestaltung der Erfindung ist vorgesehen, dass die Zugkraft F auf eine Seiltülle übertragen wird, die in Richtung auf die Antriebsspindel eine Verlängerung aufweist, die durch einen Durchbruch des mäanderförmigen Zwischenteils geführt wird und deren Ende mit der Antriebsspindel verbunden ist. Die Verlängerung ist in der Regel einteilig ausgeführt. Sie muss nicht zwingend aus dem gleichen Werkstoff wie die Seiltülle bestehen. Es ist auch möglich, die Verlängerung aus dem Werkstoff zu fertigen, aus dem das Seil hergestellt wird. Es kann somit auch möglich sein, dass die Verlängerung selbst aus einem Teil des Seiles gebildet wird, wobei die Seiltülle das Seil dann fest umschließt. In jedem Fall wird die Verlängerung so ausgestaltet und dimensioniert, dass sie im Normalbetrieb nicht mit der Zugkraft F beaufschlagt wird. Sie hat für den Normalbetrieb des Verfahrens keinerlei Funktion, sondern ist nur für den Notfall vorgesehen, wenn das mäanderförmige Zwischenteil beschädigt wird. Dabei ist vorteilhaft, dass für den Fall, dass das mäanderförmige Zwischenteil beispielsweise mittig reißt, die Funktion der Feststellbremse nicht vollständig aufgehoben wird. Gleichzeitig wird man im Betrieb der Feststellbremse in diesem Notfall während der Bestimmung der Zugkraft F durch das Verfahren auf das Reißen des mäanderförmigen Zwischenteils sofort aufmerksam. Das Ende der Verlängerung, das beispielsweise vergrößert ausgebildet sein kann, wird dabei in besonders vorteilhafter Weise in einer Bohrung der Antriebsspindel positioniert und auf diese Weise mit der Antriebsspindel verbunden.

Nach einer weiteren bevorzugten Ausgestaltung der Erfindung wird die Zugkraft F in ein mäanderförmiges Zwischenteil eingebracht, das durch Schweißen mit der Antriebsspindel verbunden ist. Dies erhöht in vorteilhafter Weise die Betriebssicherheit des Verfahrens.

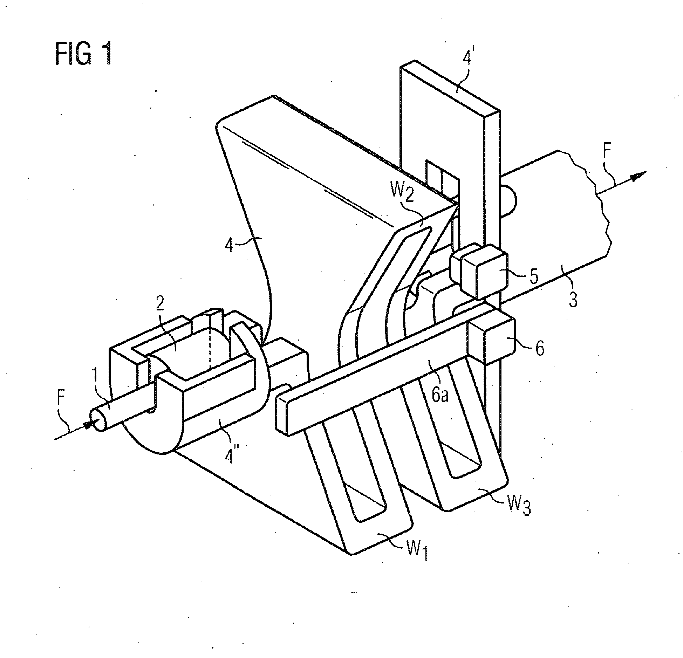

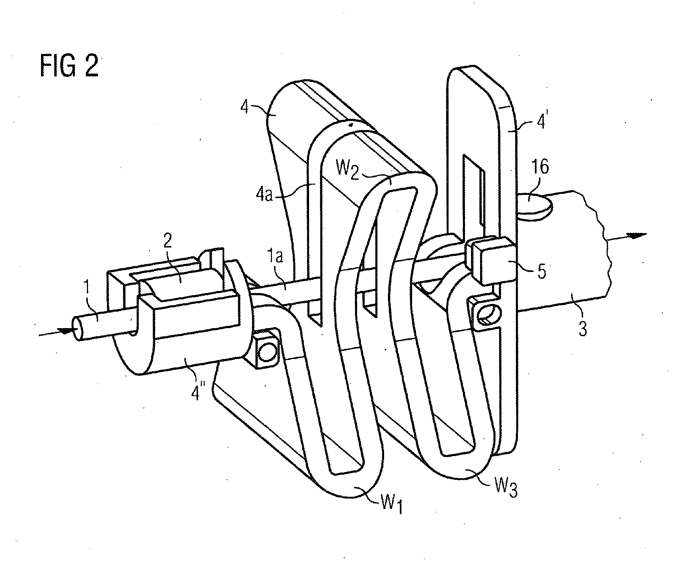

Die Erfindung wird nachfolgend anhand der Zeichnung (Fig. 1, Fig. 2) näher und beispielhaft erläutert.
- Fig. 1: zeigt das Seil, das mäanderförmige Zwischenteil und die Antriebsspindel in dreidimensionaler Form.
- Fig. 2: zeigt das Seil, das mäanderförmige Zwischenteil sowie die Antriebsspindel in einer alternativen Ausgestaltung in dreidimensionaler Form.

In Fig. 1 sind das Seil 1, das mäanderförmige Zwischenteil 4 und die Antriebsspindel 3 in dreidimensionaler Form dargestellt. Das Seil 1 weist an seinem Ende eine Seiltülle 2 auf, die an dem, der Antriebsspindel 3 abgewandten Ende 4" eines mäanderförmigen Zwischenteils 4 positioniert ist. Das mäanderförmige Zwischenteil 4 weist einen Magneten 5 auf. Durch das Einwirken der Zugkraft F erfährt das mäanderförmige Zwischenteil eine Längenänderung in Richtung seiner Längsachse, bei der es zu einer Relativbewegung zwischen dem Magneten 5 und einem Magnetsensor 6 kommt, der benachbart zum mäanderförmigen Zwischenteil 4 angeordnet ist. Der Magnet 5 und der Magnetsensor 6, der an einem Träger 6a angeordnet ist, stehen dabei im funktionellem Wechselspiel zueinander. Der Träger 6a kann beispielsweise an einem Gehäuse befestigt sein (nicht dargestellt). Das mäanderförmige Zwischenteil 4 weist 3 Wellen W1, W2, W3 auf und besitzt an seinem, der Antriebsspindel 3, zugewandten Ende ein Anschlussstück 4', an dem die Antriebsspindel 3 fest verbunden ist. Dies kann beispielsweise durch Schweißen erfolgen, sofern das mäanderförmige Zwischenteil 4 und die Antriebsspindel 3 aus einem entsprechenden metallischen Werkstoff bestehen. Bei dem Verfahren zur kontinuierlichen Bestimmung der Zugkraft F in dem Seil 1 einer Feststellbremse wird die Zugkraft F zunächst durch die Antriebsspindel 3 eingebracht und auf die Seiltülle 2 übertragen. Dadurch erfährt das mäanderförmige Zwischenteil 4 eine Längenänderung in Richtung seiner Längsachse. Diese Längenänderung führt zu einer Relativbewegung zwischen dem Magneten 5 und dem Magnetsensor 6, wodurch die Signalspannung des Magnetsensors 6 verändert wird. Aus der jeweiligen Signalspannung wird dann die Zugkraft F ermittelt, was in der Regel durch Rechner (nicht dargestellt) erfolgt. Der Magnetsensor 6 weist somit entsprechende Anschlüsse für die Versorgungsspannung und die Signalspannung (nicht dargestellt) auf.

In Fig. 2 sind das Seil 1, das mäanderförmige Zwischenteil 4 und die Antriebsspindel 3 in einer alternativen Ausgestaltung ebenfalls dreidimensional dargestellt. Die Seiltülle 2 weist in Richtung auf die Antriebsspindel 3 eine Verlängerung 1a auf, die durch einen Durchbruch 4a des mäanderförmigen Zwischenteils 4 geführt wird und deren Ende 1b, das im Querschnitt dicker ausgeführt ist als die eigentliche Verlängerung 1a, mit der Antriebsspindel 3 verbunden ist. Auf die Darstellung des Magnetsensors und des Trägers analog Fig. 1 wurde hierbei aus Gründen der Übersichtlichkeit verzichtet. Sollte es in einem Störfall zum Reißen des mäanderförmigen Zwischenteils 4 kommen, so ist sichergestellt, dass die Antriebsspindel 3 über die Verlängerung 1a und der Seiltülle 2 mit dem Seil 1 dennoch in Verbindung steht, so dass die Funktion der Feststellbremse nicht vollständig aufgehoben wird. Nur wenn dieser Notfall eintritt, wird die Verlängerung 1a, die in der Regel elastisch ausgebildet ist, mit der Zugkraft F beaufschlagt. Ein solcher Schaden des mäanderförmigen Zwischenteils 4 wird dann auch bei dem Verfahren zur kontinuierlichen Bestimmung der Zugkraft F umgehend registriert, so dass Gegenmaßnahmen eingeleitet werden können.

## Patentansprüche

1. Verfahren zur kontinuierlichen Bestimmung der Zugkraft F in einem Seil (1) einer Feststellbremse, bei dem die Zugkraft F auf eine Seiltülle (2) übertragen wird, die an einem, einer Antriebsspindel (3) abgewandten Ende (4") eines mäanderförmigen Zwischenteils (4) mit einem Magneten (5) oder einem Magnetsensor (6) positioniert ist, das durch die Zugkraft F eine Längenänderung in Richtung seiner Längsachse erfährt, bei dem die Längenänderung eine Relativbewegung zwischen dem Magneten (5) und dem Magnetsensor (6) bewirkt, wodurch die Signalspannung des Magnetsensors (6) verändert wird, und die Zugkraft F dann aus der jeweiligen Signalspannung ermittelt wird.

2. Verfahren nach Anspruch 1, bei dem die Zugkraft F in ein mäanderförmiges Zwischenteil (4) eingebracht wird, das im Querschnitt 3 bis 4 Wellen (W1, W2, W3) aufweist.

3. Verfahren nach Anspruch 1 oder Anspruch 2, bei dem die Zugkraft F auf eine Seiltülle (2) übertragen wird, die in Richtung auf die Antriebsspindel (3) eine Verlängerung (1a) aufweist, die durch einen Durchbruch (4a) des mäanderförmigen Zwischenteils (4) geführt wird und deren Ende (1b) mit der Antriebsspindel (3) verbunden ist.

4. Verfahren nach einem der Ansprüche 1 bis 3, bei dem die Zugkraft F in ein mäanderförmiges Zwischenteil (4) eingebracht wird, das durch Schweißen mit der Antriebsspindel (3) verbunden ist.

## Claims

1. Method for continuously determining the tensile force F in a cable (1) of a parking brake, in which the tensile force F is transmitted to a cable sleeve (2) which is positioned at an end (4"), facing away from a drive spindle (3) of a meandering intermediate part (4) with a magnet (5) or a magnet sensor (6) which experiences a change in length in the direction of its longitudinal axis as a result of the tensile force F, in which method the change in length brings about a relative movement between the magnet (5) and the magnet sensor (6), as a result of which the signal voltage of the magnet sensor (6) is changed, and the tensile force F is then determined from the respective signal voltage.

2. Method according to Claim 1, in which the tensile force F is introduced into a meandering intermediate part (4) which has 3 to 4 corrugations (W1, W2, W3) in cross section.

3. Method according to Claim 1 or Claim 2, in which the tensile force F is transmitted to a cable sleeve (2) which has, in the direction of the drive spindle (3), a prolongation (1a) which is guided through a breakthrough (4a) in the meandering intermediate part (4), and the end (1b) of which is connected to the drive spindle (3).

4. Method according to one of Claims 1 to 3, in which the tensile force F is introduced into a meandering intermediate part (4) which is connected to the drive spindle (3) by welding.

## Revendications

1. Procédé permettant de déterminer en continu la force de traction F dans le câble (1) d'un frein de stationnement, procédé au cours duquel la force de traction F est transmise à une douille (2) du câble qui est positionnée à une extrémité opposée à une broche d'entraînement (3) d'une pièce intermédiaire (4) à forme de méandre comportant un aimant (5) ou un détecteur (6) à aimant, ladite pièce intermédiaire subissant, sous l'effet de la force de traction F, une modification de longueur dans la direction de son axe longitudinal, la modification de la longueur provoquant un mouvement relatif entre l'aimant (5) et le détecteur (6) à aimant, si bien que la tension du signal du détecteur (6) à aimant est modifiée, et la force de traction F est déterminée à partie de la tension correspondante du signal.

2. Procédé selon la revendication 1, au cours duquel la force de traction F est appliquée à une pièce intermédiaire (4) à forme de méandre qui a, dans sa section transversale, 3 à 4 ondulations (W1, W2, W3).

3. Procédé selon la revendication 1 ou la revendication 2, au cours duquel la force de traction F est transmise à une douille (2) du câble laquelle a, dans la direction de la broche d'entraînement (3), une prolongation (1a) qui passe à travers un trou (4a) de la pièce intermédiaire (4) à forme de méandre et dont l'extrémité (1b) est liée à la broche d'entraînement (3).

4. Procédé selon l'une des revendications 1 à 3, au cours duquel la force de traction F est appliquée à une pièce intermédiaire (4) à forme de méandre qui est liée par soudure à la broche d'entraînement (3).
